Europäisches Patentamt

European Patent Office

Office européen des brevets

(11) Veröffentlichungsnummer: **0 420 044 A2**

# (12) EUROPÄISCHE PATENTANMELDUNG

(21) Anmeldenummer: 90118105.7

(22) Anmeldetag: 20.09.90

(51) Int. Cl.⁵: **B29C 51/42, B29C 35/02**

(30) Priorität: 26.09.89 DE 3932054

(43) Veröffentlichungstag der Anmeldung:
03.04.91 Patentblatt 91/14

(84) Benannte Vertragsstaaten:
AT BE CH DE DK ES FR GB GR IT LI LU NL SE

(71) Anmelder: **Eggert, Heinrich**
**Eicherweg 14**
**W-7931 Oberstadion(DE)**

(72) Erfinder: **Eggert, Heinrich**
**Eicherweg 14**
**W-7931 Oberstadion(DE)**

(74) Vertreter: **Milnes, Rodger et al**
**Boehringer Ingelheim GmbH A Patente**
**W-6507 Ingelheim am Rhein(DE)**

(54) Verfahren und Vorrichtung zum "Kalttiefziehen" von Folien.

(57) Es wird ein Verfahren und eine Vorrichtung zum Kalttiefziehen von Kunststoff-Folien beschrieben, bei welchem nur die beim Tiefziehvorgang zu verformenden Teile kurz vor und/oder während des Tiefziehvorganges durch Friktionselemente erwärmt werden, nicht jedoch die beim Tiefziehvorgang unverformten Teile.

EP 0 420 044 A2

## VERFAHREN UND VORRICHTUNG ZUM "KALTTIEFZIEHEN" VON FOLIEN

Die Erfindung betrifft ein Verfahren und eine Vorrichtung zum "Kalttiefziehen" von Folien, dadurch gekennzeichnet, daß nur die beim Tiefziehvorgang zu verformenden Teile kurz vor und/oder während des Tiefziehvorganges geringfügig erwärmt werden, nicht jedoch die beim Ziehvorgang unverformten Teile.

Die bislang bekannten Verfahren arbeiten nach dem Prinzip, daß in sogenannten Tiefziehanlagen, also Thermoformmaschinen Folien, zum Beispiel Kunststoff-Folien, primär durch Infrarotstrahlung oder aber durch sogenannte Kontaktheizung aufgewärmt und dadurch in einen plastischen Zustand versetzt werden.

Das plastische Verhalten dieser Folien wird benutzt, um über eine rotierende Vakuumwalze oder über ein spezielles Verformungswerkzeug (obere und untere Verformplatte), mittels Preßluft und eventuell in das Verformwerkzeug integrierten Vorstreckstempeln, diese plastifizierte Kunststoff-Folie in der gewünschten Form zu verändern.

Bei beiden Verfahren müssen zum Aufheizen der Kunststoff-Folien relativ große Wärmeenergien aufgewendet werden, damit der plastische Zustand dieser Folien-Kunststoffe erreicht wird.

Um die plastifizierte Kunststoff-Folie, die in einer bestimmten Form im Formwerkzeug vorliegt, formstabil zu halten und entformen zu können, muß dieses Werkzeug auf einer Temperatur gehalten werden, bei der die plastifizierte Kunststoff-Folie erstarrt, so daß diese verformte Kunststoff-Folie formstabil bleibt.

Die aufzuwendende Wärmeenergie bei den aufgeführten Verfahren ist nicht unerheblich. Gleichzeitig muß durch weiteren Energieaufwand für die Kühlung gesorgt werden, um die verformte Folie wieder formstabil zu machen.

In der Verpackungsindustrie werden nach den genannten Verfahren vielfach große Mengen PVC-Folien und deren Kombinationen verarbeitet. Diese PVC-Folien, deren Stanzabfälle und Leerpackungen sind aber ausgesprochen umweltschädlich, wenn nicht gar giftig und können nicht angemessen entsorgt werden.

Die Folienhersteller sind nun dazu übergegangen, Folien aus Polypropylen (PP) zu erzeugen, die umweltfreundlicher sind und sich letztlich zu Wasserdampf und Kohlendioxid, ohne Bildung von Säuren oder schädlichen Gasen, verbrennen lassen.

Der Nachteil dieser Polypropylen-Folien ist der, daß sie gegenüber PVC-Folien einen schlechteren Wärmedurchgang aufweisen. Dies bedeutet einen größeren Energieaufwand bei der Verarbeitung dieser Folien nach den bekannten Verfahren. Das bedeutet gleichzeitig, daß durch Kühlung der Verformungswerkzeuge zusätzlich ein Mehrbedarf an Energie erforderlich wird.

Beispiele aus Japan und den USA, wo diese Polypropylen-Folien seit Jahren nach den geschilderten Verfahren verarbeitet werden, belegen dies.

Ein weiterer Nachteil von Polypropylen-Folien besteht darin, daß vorhandene Tiefziehwerkzeuge beziehungsweise -anlagen, die ursprünglich für die Verarbeitung von PVC-Folien gebaut wurden, größtenteils nicht mehr für die Verformung der Polypropylen-Folien verwendet werden können, da die erforderliche Heiz- und Kühllasten in diesen Systemen nicht mehr unterzubringen sind. Ebenso wenig können die vorhandenen Werkzeuge für die Verarbeitung von PVC-Folien für die schwierigere Polypropylen-Folien-Verarbeitung eingesetzt werden, da der Ausdehnungs-Koeffizient beziehungsweise der Schrumpffaktor dieser beiden Kunststoff-Folien sehr unterschiedlich ist.

In der DE-PS 32 03 336 ist eine Vorrichtung der eingangs genannten Art beschrieben, mittels der an einem Abschnitt eines becherförmigen Behälters eine Stufe geformt wird. Das Formen der Stufe erfolgt mittels eines ultraschallbeaufschlagten Formstempels, wobei die Folie scharf umgelenkt wird.

Die Erfindung geht aus von dem eingangs definierten Verfahren und verfolgt die Aufgabe, die Tiefziehvorgänge auch bei sehr kritischem Werkstoff mit sehr geringem Energieaufwand und damit ohne Verzugsgefahr formstabil herzustellen.

Zur Lösung dieser Aufgabe werden erfindungsgemäß nur die beim Tiefziehvorgang zu verformenden Teile wenigstens kurz vor dem Tiefziehvorgang mittels eines Friktionselements dosiert erwärmt, nicht jedoch die beim Ziehvorgang unverformten Teile.

Bei der erfindungsgemäßen Vorrichtung ist somit die Auflage für die Folie als Tiefziehmatrize mit den zu formenden Näpfen zugeordneten Matrizenbohrungen ausgebildet und das Friktionselement ist als Tiefziehstempel ausgebildet, der um seine senkrecht zu der Folienoberfläche verlaufende Längsachse drehantreibbar ist. Es wird keine Heizenergie von außen zugeführt, sondern diese wird vielmehr unmittelbar um und an der Folie durch Reibungswärme erzeugt, die kurzzeitig unmittelbar im Einwirkungsbereich auf die beim Ziehvorgang zu verformenden Teile der Folie, das heißt nur im Erweichungsbereich durch das relativ zur Folie bewegte Friktionselement erzeugt wird. Hierdurch ergibt sich ein sehr geringer Energieverbrauch.

Infolge der genauen Führung des Friktionselementes kann die erzeugte Wärmemenge genau dosiert werden, ohne daß Zersetzungsgrenzen oder dergleichen überschritten werden. Es kann eine größere Anzahl solcher Friktionselemente vorgesehen werden, wenn zum Beispiel eine große Zahl Tabletten oder dergleichen in einer Verpackungsebene untergebracht werden sollen.

Das erfindungsgemäße Verfahren und die erfindungsgemäße Vorrichtung sind in erster Linie für Kunststoff-Folien und vor allem für Folien aus Polypropylen bestimmt, kann aber auch für alle anderen geeigneten Folienwerkstoffe, beispielsweise Blattmetalle, etwa aus Aluminium oder Edelmetall zur Anwendung gebracht werden. Bei schlechten Wärmeleitern kann von einer Kühlung zwischen den kurzzeitig erwärmten zu verformenden Teilen der Folien in aller Regel abgesehen werden, und bei guten Wärmeleitern reicht durchweg eine Masseableitung, ohne daß in der Nähe der zu verformenden Folienteile aktiv gekühlt werden muß. Diese Verhältnisse ändern sich jedoch durch den Folienwerkstoff, das Arbeitsverfahren und vor allem die Herstellungsgeschwindigkeit, so daß die Frage einer Zwischenkühlung von Fall zu Fall gesondert entschieden werden muß.

Der geringe Energieverbrauch wird vor allem dadurch erreicht, daß die kurzzeitige Erwärmung der zu verformenden Folienteile ohne von außen unmittelbar zuzuführende Heizenergie erfolgt und die benötigte Heizenergie unmittelbar in oder an der Folie erzeugt wird.

Die Heizenergie zum Erweichen der Folie wird nur durch Reibungswärme aufgebracht, die kurzzeitig unmittelbar im Einwirkungsbereich auf die beim Ziehvorgang zu verformenden Teile der Folie erzeugt wird. Gerade dabei wird augenfällig Wärme von außen selbst nicht übertragen, sondern im Erweichungsbereich erzeugt. Dies wird dadurch erreicht, daß die zu erweichenden Teile der Folie unmittelbar mit einem relativ zu ihr bewegten Friktionselement in Berührung gebracht werden. Hierzu verwendet man einen zum Einformen eines Napfes in die Folie vorgesehenen Tiefziehstempel, der wenigstens während des Tiefziehvorganges in Rotation versetzt wird. Diese Ausführung hat auch den Vorteil, daß man das Friktionselement exakt führen und dadurch die benötigte Wärmemenge genau dosieren kann, ohne daß Zersetzungsgrenzen oder dergleichen überschritten werden.

Die Erfindung betrifft ferner eine Vorrichtung zum "Kalttiefziehen" von Folien, insbesondere zum Ausüben des vorbeschriebenen Verfahrens, mit einer Matrize zur Auflage und Halterung der Folie im Tiefziehvorgang und mit einem quer zur Oberfläche der Folie und der Matrize bewegbaren Verformungswerkzeug. Diese Vorrichtung ist erfindungsgemäß gekennzeichnet durch eine an der Folie im Bereich der an dieser zu verformenden Teilen vorgesehenen Erweichungseinrichtung, die zweckmäßigerweise wenigstens ein an der Folie zur Anlage zu bringendes Friktionselement aufweist. Es kann eine größere Anzahl solcher Friktionselemente vorgesehen werden, wenn zum Beispiel eine große Zahl von Formlingen, z. B. von Tabletten oder Süßwaren, in einer Verpackungsebene untergebracht werden soll.

Weitere Vorteile und Ausgestaltungen der Erfindung sind in den Unteransprüchen festgehalten und sollen nun anhand der Zeichnung ausführlicher erläutert werden. Es zeigen:

Fig. 1 einen lotrechten Teilschnitt durch eine erfindungsgemäße Tiefziehvorrichtung für eine Tabletten- oder Drageeverpackung im geschlossenen Betriebszustand und

Fig. 2 die Vorrichtung gemäß Fig. 1 im geöffneten Betriebszustand.

Bei dieser dargestellten Tiefziehvorrichtung wird Wärme weder über eine Wärmestrahlung oder allgemein eine Strahlungsenergie, noch durch eine Kontaktheizung aufgebracht, was bei dem einleitend beschriebenen Verfahren Grundvoraussetzung zur plastischen Verformung ist.

Zur Verformung der Kunststoff-Folie (4) wird eine gekühlte Tiefziehmatrize (1) verwendet, wobei die Kunststoff-Folie (4) bei jedem Arbeitstakt jeweils nur kurzzeitig durch unmittelbar an ihren Verformungsstellen in ihr beziehungweise an ihrer Oberfläche erzeugte Reibungswärme aufgeheizt wird. Es muß also nur an denjenigen Stellen der Folie, die unmittelbar verformt werden, mittels einer Erweichungseinrichtung (26) örtliche Reibungswärme aufgebracht werden.

Hierzu dienen rotative Tiefziehstempel (5) aus schlechten Wärmeleitern, so daß kaum Wärme nach außen abgeleitet wird. Die erzeugte Reibungswärme genügt gerade bei Polypropylen-Folien, um bei der dargestellten Form des Tiefziehstempels (5) die nötige Verformung der Kunststoff-Folie (4) zu bewerkstelligen.

Diese Tiefziehstempel (5) sitzen jeweils in Ritzelwellen (10), die um ihre Achse (25) umlaufen, an einen gemeinsamen Antriebsmotor (6) angeschlossen sind und von diesem in der Regel durchlaufend in Rotation versetzt werden.

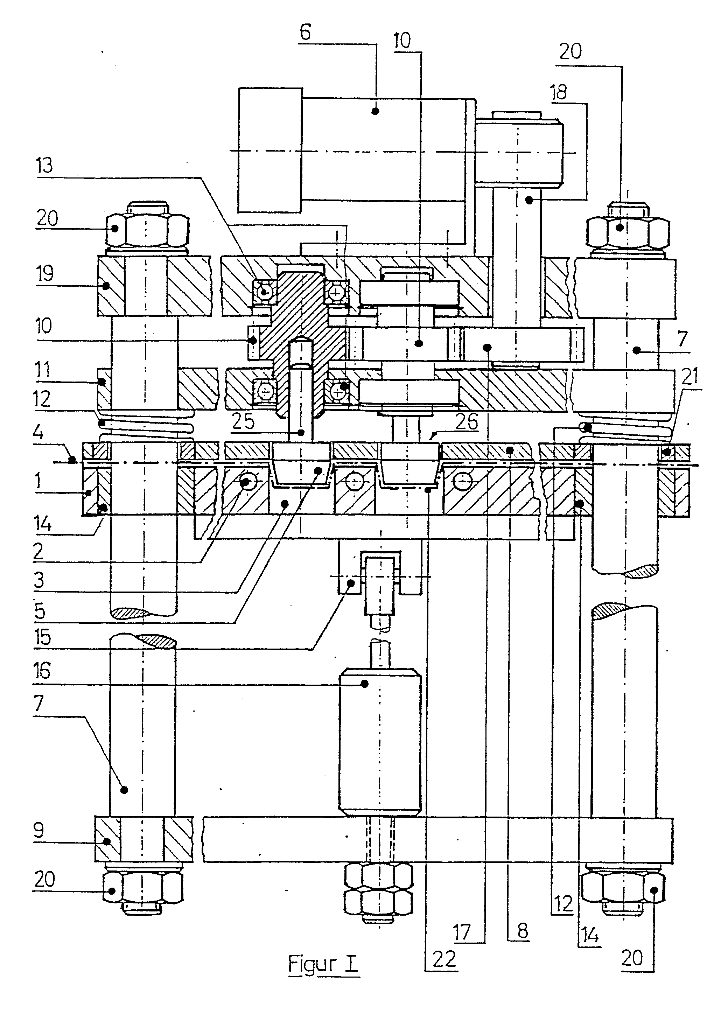

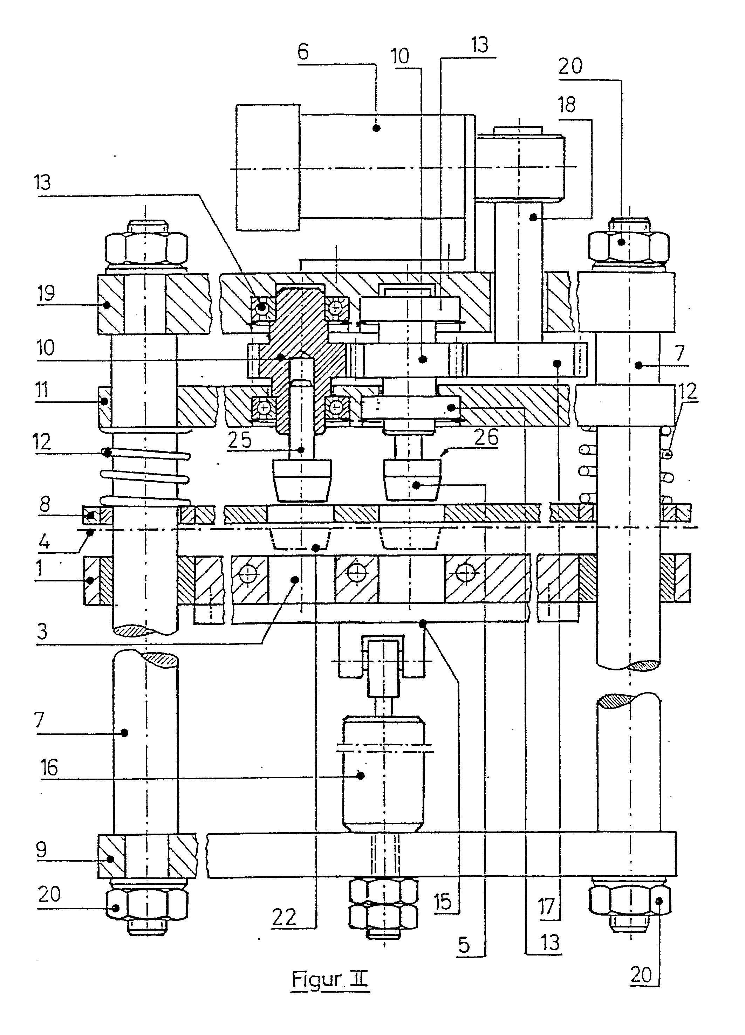

Die zu verformende Folie (4) wird bei Raumtemperatur auf der Oberfläche der Tiefziehmatrize (1) mit dem in Axiallagern (21) geführten Niederhalter (8), auf der gekühlten Tiefziehmatrize (1) durch die Rückholfeder (12) festgeklemmt. Durch das Hubaggregat (16), das an die Montageplatte (15) sowie an der Befestigungsplatte (9) angekuppelt ist, wird die Tiefziehmatrize (1) vertikal an den Führungssäulen (7) hochgefahren, so daß die eingeführte Kunststoff-Folie (4) zwischen dem Niederhalter (8) und der Tiefziehmatrize (1) festgeklemmt und, wie in Fig. 1 verdeutlicht, durch die rotierenden Tiefziehstempel (5) verformt wird. Der Kühlkanal (2) in der Tiefziehmatrize (1) wird zur besseren Wärmeabfuhr mit Wasser beaufschlagt. Ob diese zusätzliche Kühlung erforderlich ist, muß im Einzelfall anhand der Betriebsumstände und des Folien-Werkstoffes überprüft werden.

Unter dem axialen Druck der mit einer relativ niedrigen Drehzahl rotierenden Tiefziehstempel (5) wird die örtlich aufgeheizte Kunststoff-Folie (4) in die Matrizenbohrung (3) gedrückt und erstarrt dort augenblicklich unter dem Einfluß des Kühlmediums, das im Kühlkanal (2) in der Tiefziehmatrize (1) geführt wird.

Nach Absenken der Tiefziehmatrize (1), die mit Axiallagern (14) ausgestattet ist, wird die verformte Kunststoff-Folie (4) durch den Niederhalter (8) unter Einwirkung der Rückholfeder (12) abgestreift, wie dies Fig. 2 verdeutlicht.

(11) ist die untere Lagerplatte und (19) die Kopf-Lagerplatte. Zwischen den Lagerplatten (11, 19) sind die Ritzelwellen (10) in den Lagern (13) zentrisch geführt. Diese Ritzelwellen werden durch das Antriebsritzel (17), das auf der Antriebswelle (18) des stufenlos regelbaren Antriebes (6) sitzt, zentral angetrieben. Die Tiefziehstempel (5) sitzen auswechselbar auf den Ritzelwellen (10) und können nach Bedarf durch Stempel anderer Konfiguration ersetzt werden.

Die gesamte Werkzeugeinheit ist auf den Führungssäulen (7) montiert und über die Muttern (20) fixiert.

(22) ist der tiefgezogene Napf, wie er nach Fig. 2 ohne fremde Wärme in der Vorrichtung entstanden ist.

## Ansprüche

1.) Verfahren zum Kalttiefziehen von Folien, dadurch gekennzeichnet, daß die Heizenergie zum Erweichen der zu verformenden Folienteile durch Reibungswärme kurzzeitig unmittelbar an den zu verformenden Teile der Folie erzeugt wird.

2.) Verfahren nach Anspruch 1, dadurch gekennzeichnet, daß die zu erweichenden Teile der Folie unmittelbar mit einem relativ zu ihr bewegten Friktionselement in Berührung gebracht werden.

3.) Verfahren nach Anspruch 2, dadurch gekennzeichnet, daß ein zum Einformen eines Napfes in die Folie vorgesehener und als Friktionselement dienender Tiefziehstempel wenigstens während des Tiefziehvorganges in Rotation versetzt wird.

4.) Vorrichtung zum Kalttiefziehen gemäß Anspruch 1 wenigstens eines Napfes in einer Folie, wobei nur die zu verformenden Folienbereiche während des Kalttiefziehens mittels Friktion erwärmt werden, mit einer Auflage und einer Halterung für die Folie beim Tiefziehvorgang, mit einem quer zur Oberfläche der Folie bewegbaren Verformungswerkzeug und mit einem an den zu erwärmenden Folienbereichen anliegenden Friktionselement, dadurch gekennzeichnet, daß die Auflage für die Folie als Tiefziehmatrize (1) mit den zu formenden Näpfen (22) zugeordneten Matrizenbohrungen ausgebildet ist, und daß das Friktionselement als Tiefziehstempel (5) ausgebildet ist, der um seine senkrecht zu der Folienoberfläche verlaufende Längsachse drehantreibbar ist.

5.) Vorrichtung nach Anspruch 4, dadurch gekennzeichnet, daß der Tiefziehstempel (5) an einer drehbaren Welle (10) auswechselbar angeordnet ist.

6.) Vorrichtung nach einem der Ansprüche 4 oder 5, dadurch gekennzeichnet, daß der Hub des Hubaggregates (16) für die Tiefziehmatrize (1) oder für den Tiefziehstempel (5) entsprechend der Napfdichte einstellbar ist.

7.) Vorrichtung nach einem der Ansprüche 4, 5 oder 6, dadurch gekennzeichnet, daß die Tiefziehmatritze (1) eine oder mehrere zylindrische Matrizenbohrungen (3) aufweist.

Figur I

Figur II